# EUROPEAN PATENT APPLICATION

(11) **EP 2 866 415 A1**
(43) Date of publication of application: **29.04.2015**
(21) Application number: 13306468.3
(22) Date of filing: 24.10.2013
(51) Int. Cl.: H04L 29/08

(54) **Instant sharing of contents broadcasted over a local network**

(71) Applicant: NEC Corporation, Minato-ku, Tokyo 108-8001 (JP)
(72) Inventor: Renard, Cyril, 78290 Croissy s/Seine (FR); Beaugrand, Fabrice, 92500 Rueil Malmaison (FR); Zappulla, Fabrice, 95600 Eaubonne (FR)
(74) Representative: Cabinet Plasseraud

(57) **Abstract**

The present invention concerns a method for broadcasting data from a first device (D1) and over a local network (LAN), wherein, prior to the broadcast of said data, the first device (D1) broadcasts a first message informing at least one second device (D2) connected to the local network of a future broadcast of data to receive from the first device. Symmetrically, upon reception of the first message, the second device (D2) puts itself into an available mode so as to receive broadcast data from the first device (D1).

## Description

The present invention relates to the technical background of short range communication between several terminal devices (such as mobile phones, smartphones, tablets, connected computers, etc.).

More particularly, the present invention relates to the broadcast of data over a local network from one device to other devices linked to the network. Such data can be for example data of a content which can be a multimedia content (image, video, audio file, etc.) or a work content (text document, table data, electronic visit card data to be used for example by an email managing program, etc.).

The broadcast from a device, initiated simply upon a command applied by a user of that device, can be convenient for instant sharing contents with other users having their devices connected to the local network. However, if several devices broadcast contents at a same time, an overload of the devices can occur, resulting in possible data packet losses and high latencies to receive the expected data.

The present invention aims to improve the situation.

To that end, the invention aims at a method for broadcasting data from a first device and over a local network, wherein, prior to the broadcast of said data, said first device broadcasts a first message informing at least one second device connected to said local network of a future broadcast of data to receive from the first device.

Therefore, the invention provides an advantage of preventing conflicts between several devices broadcasting data at a same time.

In fact, upon reception of the first message, the second device can put itself into an available mode so as to receive broadcast data from the first device. For example, upon reception of the first message, the second device can open a communication port (for example a TCP port), that communication port being dedicated to reception of data broadcasted from the first device.

Therefore, the reception of the first broadcast message at the second device can prevent the second device from opening any new further broadcast session with any other broadcasting device.

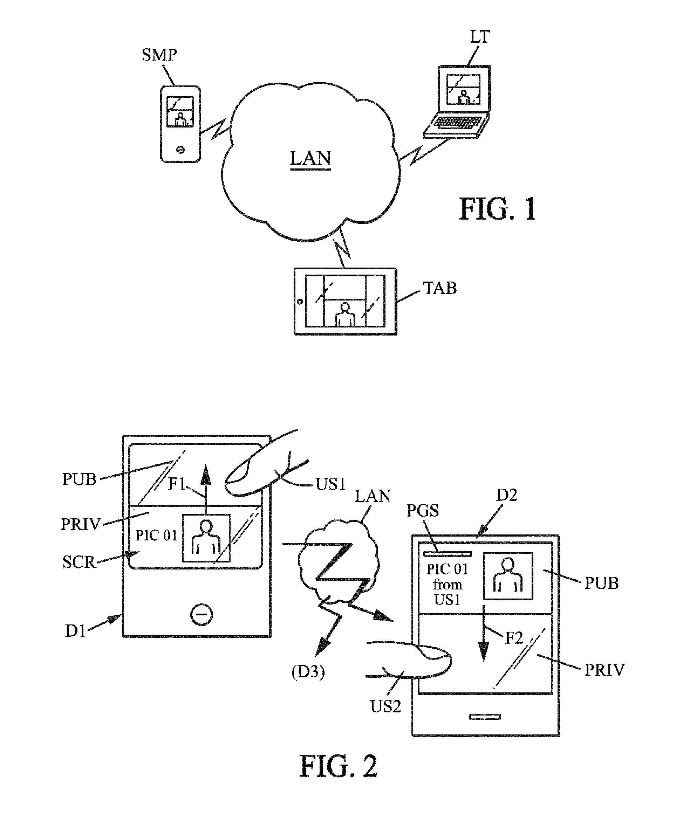

In an embodiment, the first message broadcast can be caused by an input from a user of said first device of a command to broadcast said data, said input being sensed by a sensor of the first device. For example, as shown in figure 2 commented below:
- the sensor can be a touchscreen,
- and, if data to broadcast are data of a content, usually represented by a thumbnail on the touchscreen,
- the first message broadcast can be caused by a gesture of the user comprising for example a finger sliding on said touchscreen from a location of said thumbnail and at a first direction (for example from down to up, as represented by the arrow F1 of figure 2).

In a complementary embodiment, upon reception of the content on the second device, the aforesaid thumbnail can be displayed on a touchscreen of the second device, and a storage of that content in a permanent memory of the second device can be caused by a gesture of a user of the second device. For example, that gesture can comprise a finger sliding on the touchscreen of the second device from a location of the thumbnail in the touchscreen and at a second direction, opposite to the first direction (for example from up to down, as represented by the arrow F2 of figure 2).

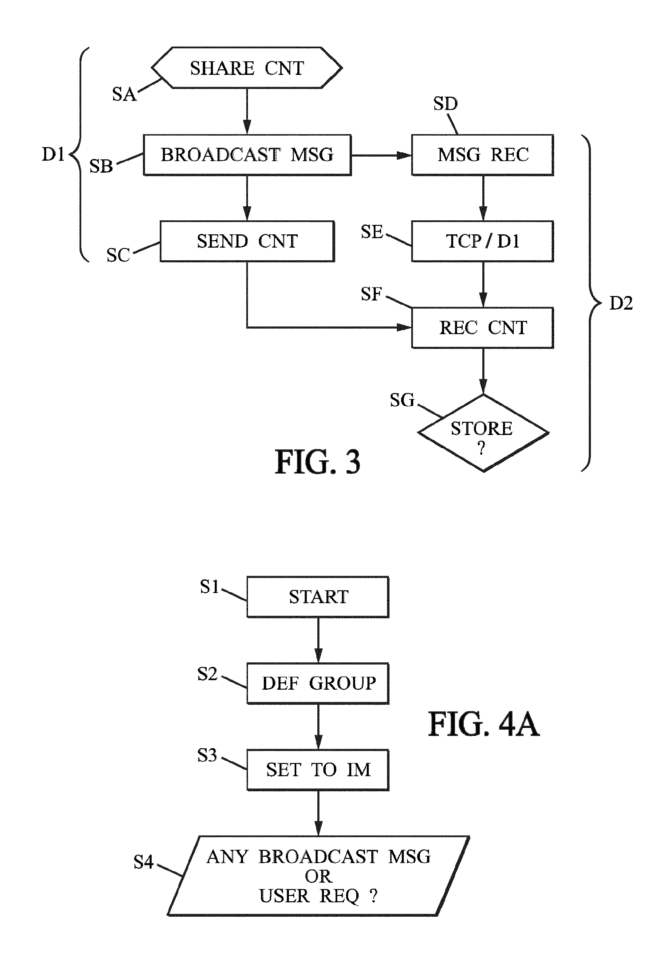

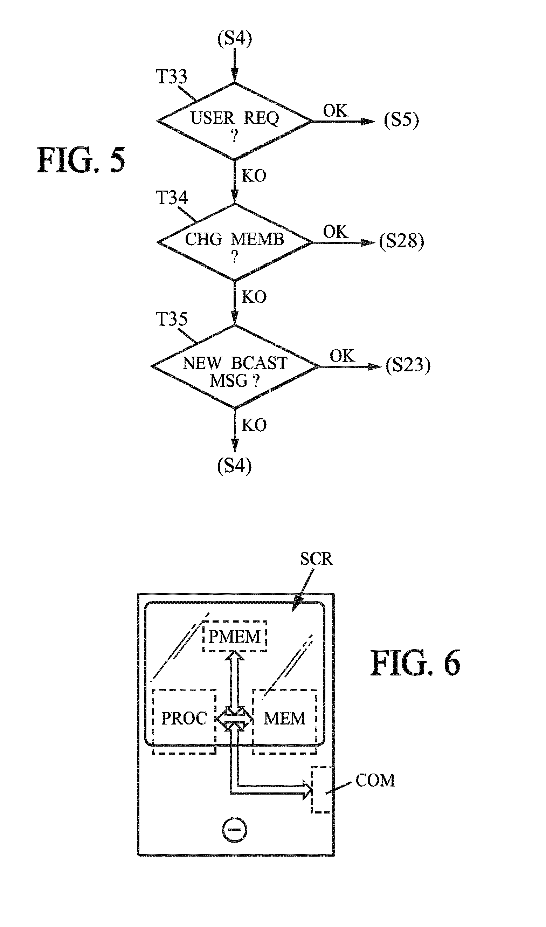

In an embodiment (corresponding to step S2 in the example of figure 4A and/or to test T34 in the example of figure 5 commented below), the aforesaid devices determine repeatedly which devices are being connected to the local network.

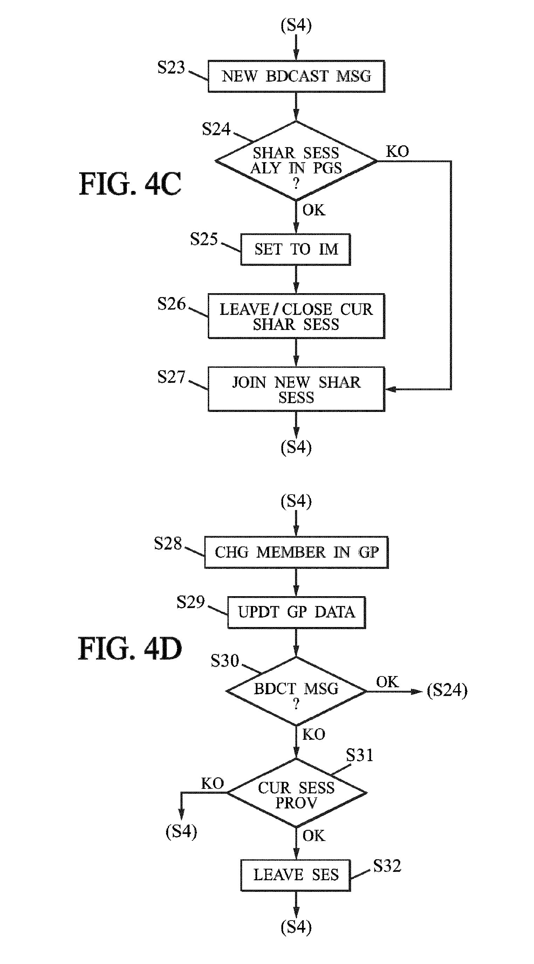

More particularly, in an embodiment (corresponding to steps S31, S32 in the example of figure 4D), the second device determines repeatedly whether the first device is still connected to the local network, and, if the first device is no more connected to the network, the second device closes the session of broadcast from the first device (and for example sets free the aforesaid communication port so as to allow the reception of another broadcast on that port).

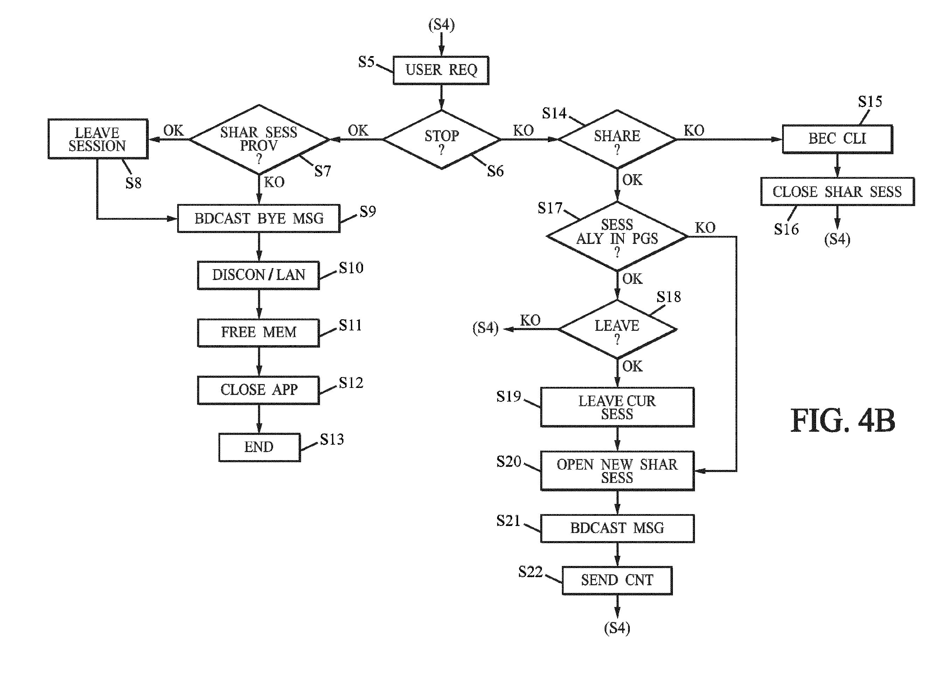

In an embodiment (corresponding to step S9 in the example figure 4B), the first device, upon reception of a command of disconnection from the local network, broadcasts a second message informing at least the second device of a future disconnection of the first device.

In an embodiment (corresponding to steps S23-S27 in the example figure 4C), the second device, upon reception of a broadcast message informing the second device of a future broadcast of data to receive from a third device, closes a session of broadcast from the first device, and puts itself into an available mode so as to receive broadcast data from the third device.

In fact, it is assumed in that embodiment that the user of the third device can see on his device that the broadcast from the first device is still in progress and can wait for the end of the broadcast session with the first device before starting a new broadcast session.

More generally, it should be understood furthermore that the wording "broadcast session" (called also "sharing session" in the detailed description hereafter) aims here at a session during which one device is having the role of a broadcaster ("master") while the other devices are having the role of receivers ("slaves"). That "session" shall not thus be understood as related to a session having a session ID, such as a TCP session for example. It is rather related to a session during which one device is entitled to broadcast data while the other connected devices have the only right to receive such data from the broadcasting device. When the broadcasting device changes, then a new session starts.

Besides, in an embodiment (corresponding to step S17 in the example figure 4B), the first device:
- before broadcasting the first message, can detect whether a broadcast session over the local network is already in progress,
- at least upon detection of the broadcast session, can close the broadcast session, and
- can open a new broadcast session with the broadcast of the first message.

In fact, in that embodiment, as the local network is a short range communication network, users of the connected devices can see each other and can agree to close a current broadcast session and to open a new one initiated by another device.

The present invention aims also at a device (such as the aforesaid first device), comprising communication means for broadcasting data over a local network, and further comprising processing means for, prior to the broadcast of said data, driving said communication means so as to broadcast a first message over the local network to inform at least one other device connected to the local network of a future broadcast of data to receive from the communication means.

Such a device, in the example shown in figure 6, can comprise:
- communication means such as a communication interface COM which is usually linked to an antenna for example, and
- processing means comprising typically a processor PROC and a working memory MEM.

The invention aims also at a device (such as the aforesaid second device), comprising communication means via a local network and processing means for, upon reception of a broadcast message informing said device of a future broadcast of data to receive from another device connected to said local network, driving said communication means for putting said communication means into an available mode so as to receive broadcast data from said other device.

Such communicating and processing means can be the ones shown in the example of figure 6, in a possible embodiment.

The present invention aims also at a computer program product, comprising instructions for performing the method presented above, when run by processing means. The examples of figures 3, 4A to 4D, and 5, can represent flow charts of an algorithm of such a computer program.

The present invention is illustrated by way of example, and not by way of limitation, in the figures of the accompanying drawings, in which like reference numerals refer to similar elements and in which:
- Figure 1 represents a group of terminal devices connected through a local area network;
- Figure 2 shows an example of a command F1 initiated by a user to broadcast a content and a command F2 to store a received content;
- Figure 3 is a flow chart including general steps of the method according to an embodiment of the invention;
- Figures 4A, 4B, 4C, 4D are successive flow charts including detailed steps of the method according to an embodiment of the invention;
- Figure 5 is a flow chart indicating an order for performing steps shown on figures 4A, 4B, 4C, 4D;
- Figure 6 shows a terminal for performing the method according to an embodiment of the invention.

Reference is made to figure 1, first, to show the context within which the invention can find an application. In the example given in figure 1, a plurality of devices such as a smartphone SMP, a tablet TAB, a laptop LT, etc., are linked together through of local area network LAN, so as to share contents between them, such as multimedia contents (movies, pictures, music, etc.), work files (text, documents, data tables, etc.), etc.

Referring now to figure 2, the user US1 of a first device D1 is willing to send a content, such as a picture PIC01, to other devices D2, D3, etc., connected to the network LAN. To this end, a computer application running on the first device D1 makes it possible for the user US1 of device D1 to apply a command so as to select the content PIC01 and to broadcast data of that content PIC01 to the other devices connected to the network LAN. In an example of embodiment, a gesture of the user US1 applied to the device D1 can be detected by the device D1 so as to interpret that gesture as aiming the aforesaid content broadcast command. For example, the user US1 can slide his finger (arrow F1 of figure 2) on a touchscreen SCR of device D1 from down to up so as to apply the gesture to command the content broadcast. To that end, the computer application running on the device D1 can divide the screen SCR into two parts:
- a private part PRIV, showing contents (such as PIC01), stored in a memory of the device D1 and which can be selected for the broadcast, and
- a public part PUB, showing contents which have been selected to be broadcasted, and for which the broadcast is over or is still in progress.

For example, the gesture shown by the arrow F1 (finger sliding on the touchscreen SCR from down to up) can imply a representation on the screen SCR of a thumbnail of the content PIC01 sliding from the private part PRIV to the public part PUB of the screen.

Figure 2 shows also the reception of the content PIC01 on a device D2. In the shown example, a progression bar PGS is displayed in the public part PUB of the screen of the device D2, showing that data of content PIC01 is being received from the network LAN. Moreover, a message indicating that content PIC01 is being received from the user US1 of device D1 can be displayed also. When all data of content PIC01 are received indeed on device D2, the user US2 of device D2 can see the thumbnail of the content PIC01 and can apply a command so as to select the content PIC01 and to store it in a permanent memory PMEM (figure 6). In an example of embodiment, a gesture of the user US2 applied to the device D2 can be detected by the device D2 so as to interpret that gesture as aiming the storage of the content PIC01. For example, the user US2 can slide his finger (arrow F2 of figure 2) on a touchscreen SCR of the device D2 from up to down, e.g. from the public part PUB to the private part PRIV, so as to apply the gesture to command the storage of the content PIC01 previously received from user US1.

Referring now to figure 3, a first step SA of a method according to an embodiment of the invention is relative to a detection of a command of the user US1 to share, over the network LAN, the content PIC01. Consequently to that command, the first device D1 broadcasts a message MSG over the network LAN, at step SB, so as to inform all the devices connected to the network that device D1 will broadcast data (content data for example). Then, at step SC, the data broadcast can begin. More details of particular steps of that method will be described with reference to figures 4A, 4B, 4C, 4D, as examples of embodiments given hereafter in the present specification. However, it is important to show with reference to figure 3 the step SB which is carried out so as to indicate to all connected devices that device D1 begins a content broadcast and that the other devices D2, D3, etc., should "listen" to device D1. To that end, for example according to a TCP protocol, the device D1 can open a TCP socket after having broadcasted the message MSG. Then, the devices D2, D3, etc., can initiate a TCP handshake (step SE of figure 3), as clients, with the device D1 which acts therefore as a server, so that devices D2, D3, etc., can start receiving data of the content PIC01 (step SF). Once the reception of the content PIC01 is complete on device D2, a step SG can be performed on device D2 to propose to its user US2 to store the content in a permanent memory.

The above-cited "first message" and more generally data packets relating to TCP handshakes (according for example to TCP protocol or UDP protocol) are preferably sent repetitively. In fact, it has been observed with cellular smartphones that such data packets can be lost often in the local network. Then, in particular for UDP packets exchanged to implement the invention, it is preferred to broadcast redundantly such signaling data packets.

With reference now to figure 4A, a first step S1 aims at initiating the local network LAN (a short range network, using radiofrequency waves, such as Wi-Fi, Bluetooth, etc.). The network LAN can be an ad-hoc network (e.g. temporary, and providing for example one of the devices as a hotspot - which is not necessarily the server D1) or a network with infrastructure (e.g. permanent, using for example a Wi-Fi public access hotspot). Step S2 aims at defining the group of devices D1, D2, D3, etc., connected to the network LAN. Then, each device which is member of the group defined in step S2 is set to an idle mode at step S3. Therefore, in that idle mode, in step S4, each device awaits:
- the reception of any message indicating a future broadcast of a content (the device acting as a client), or
- a command input by its user to broadcast over the network a content selected by the user (the device acting as a server).

Figure 4B shows the steps implemented in the situation where the device D1 receives an input from its user US1 at step S5. In the example given in that figure 4B, the next step S6 is a test so as to detect whether the user wants to stop the application of sharing contents over the network LAN or not (depending on an input of the user in a menu displayed on the screen SCR for example).

If the user wants to stop the application (arrow ok at the output of test S6), another test S7 is performed to detect whether the device D1 is a current content provider during a sharing session in progress. If it is a current provider (arrow ok at the output of test S7), then a step S8 is performed to leave the current session (typically like an end of transmission in a TCP session). Otherwise (arrow ko at the output of test S7), a step S9 of broadcasting over the network LAN a message indicating that device D1 is leaving the network can be carried out directly. Then, device D1 disconnects from the network (step S10). The application running on other devices D2, D3, etc., can delete data of a content received only partly if device D1 was a content provider. Moreover, if device D1 was receiving content data when its user decided to leave the session (arrow ok at the output of test S6), the permanent memory of device D1 can be freed as well from data of a content received only partly from any other device D2, D3, etc., in step S11. Then, the sharing application can be closed in step S12 and the process is ended at step S13.

If the user does not want to stop the application (arrow ko at the output of test S6), another test S14 is performed to detect whether the user wants to share a content (thanks to a sensor sensing a specific gesture for example, like a finger sliding in a particular direction of the touchscreen SCR). If the answer is that the user does not want to share any further content (arrow ko at the output of test S14), then the application running on device D1 sets the device D1 to become client in step S15 and close any current sharing session in step S16. The device D1 returns thus to an idle mode like in step S4 previously described.

If the answer to test S14 is that the user wants to share a content (arrow ok at the output of test S14), then a further test S17 is carried out to determine whether a current session is already in progress. If no session is being in progress (arrow ko at the output of test S17), then the device D1 can open a new session for sharing a content selected by the user of device D1 in step S20. Therefore, a message indicating that device D1 will provide a content is broadcasted over the network in step S21 and the content can thus be broadcasted in step S22. After that step S22, the device D1 can return to the idle mode of step S4.

However, if a sharing session is already in progress (arrow ok at the output of test S14), a confirmation can be asked to the user for deciding to leave or not the current session in step S18. If the user does not want to leave the current session (where device D1 is actually a client receiving a broadcast), then the device D1 can return to an idle mode like in step S4 to continue to receive the content broadcasted in the current sharing session. Otherwise (arrow ok at the output of test S18), the device D1 leaves the current sharing session in step S19 and opens a new sharing session at step 20 like described above.

Figure 4C is relative to another kind of event occurring after step S4 (different from the case of a user input described above with reference to figure 4B) and shows the steps implemented in the situation where the device D1 receives a new broadcasted message (in step S23) indicating that a device in the network will broadcast a content. The next step is a test S24 to determine whether a sharing session is already in progress. If not (arrow ko at the output of test S24), then the device D1 can join the new sharing session in step S27 and begin to receive the newly shared content. Otherwise (arrow ok at the output of test S24), the device D1 can be set to become client (if it was previously a server in a precedent session) so as to be in an idle mode in step 25 to receive the newly broadcast content, and can close the precedent sharing session (if device D1 was server) or leave the precedent sharing session (if device D1 was client) in step 26, to join the new sharing session in step S27.

In fact, it is assumed that a device of the network will not transmit any message informing the other devices of a new sharing session if a content is already being broadcasted. First, referring to step S18 of figure 4B, it is assumed that a user will not open a new sharing session if a content is still being broadcasted during a current sharing session. In fact, the arrow ok at the output of test S18 is provided in the case that the whole content has been broadcasted already and in the situation where a device is still a server in a current session but the broadcast is already finished. Moreover, as indicated above, the network LAN is a short range one so that the users of the devices can see each other and can talk to each other: the conflicts between devices broadcasting messages to become servers should be ra re.

Figure 4D is relative to another kind of event occurring after step S4 (different from the cases described above with reference to figures 4B and 4C) and shows the steps implemented in the situation where a new member joins the group of devices connected to the network LAN. In the case where a device enters or leaves the network, a notification is received by each connected device at step S28 and each device D1 updates data relative to the group in step S29 (IP addresses, users of each device, the device being the hotspot, etc.). If a new broadcast message is received from a device, most likely because a new member joined the group to share a content (arrow ok at the output of test S30), then the process can continue with step S24 described above with reference to figure 4C. Otherwise (arrow ko at the output of test S30), another test S31 is performed to determine whether one device which left the group was previously a content provider. If the answer is positive (arrow ok at the output of test S31), then the device has to leave the current session in step S32 and to return to an idle mode (in step S4). If the answer is negative (arrow ko at the output of test S31), then it means that at least one member joined or left the group without being however a server and the device D1 can return to the idle mode of step S4.

The process described above can be automated thanks to the run of the application on the device after step S1 described above with reference to figure 4A. The application can be run periodically on the device (every minute or less for example), so as to determine whether members joined or left the network or whether a new broadcast message has been received to inform about a future content broadcast. Reference is made now to figure 5 to describe an exemplary embodiment where tests T33, T34, T35 are performed repeatedly to determine respectively:
- whether the user of the device entered a request or not (like in steps S5 or S6 or S14 or S18 of figure 4B),
- then, whether a change occurred or not in the group of members connected to the network (like in step S28 of figure 4D),
- then, whether a new broadcast message has been received or not to inform about a new future content broadcast (like in step S23 of figure 4C),
in that order given above.

Test T34 can be performed periodically indeed so as to "recall" also to the devices connected to the network LAN which device is being defined as the master (e.g. so as to maintain in the network LAN the notion of which device is entitled to broadcast data over the network), even if that device is not sending or broadcasting anything anymore. This embodiment makes it possible also to detect any device which has left the network (disconnection owing to a bad reception from the access point or owing to a power-off of the device, etc.). Moreover, further to that periodical determination, at each new connection of a device to the network, an update of the connections to the network LAN is immediately performed. In an embodiment, at each new connection to the LAN, each connected device broadcasts over the network its current state such as "MASTER" or "SLAVE" respectively for broadcasting of receiving data.

Of course, the invention can be performed by a device according to the invention, and especially programmed to perform the steps described above in an example of embodiment, such a device comprising, with reference to figure 6:
- processing means such as a processor PROC and a working memory MEM,
- communication means (for example a communication interface COM and an antenna for radiofrequency communications),
- and a permanent memory (for example a non-volatile memory) to store contents received from other connected devices.

The present invention can also be embedded in a computer program product, which comprises all the features enabling the implementation of the method described herein, and which, when loaded in an information processing system (for example in a user device), causes the information processing system to perform the method of the invention. Computer program means or computer program in the present context mean any expression, in any language, code or notation, of a set of instructions intended to cause a system having an information processing capability to perform a particular function either directly or after the conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method for broadcasting data from a first device and over a local network, wherein, prior to the broadcast of said data, said first device broadcasts a first message informing at least one second device connected to said local network of a future broadcast of data to receive from the first device.

2. The method of claim 1, wherein, upon reception of the first message, said second device puts itself into an available mode so as to receive broadcast data from the first device.

3. The method of claims 1 or 2, wherein, upon reception of the first message, said second device opens a communication port dedicated to reception of data broadcasted from said first device.

4. The method according to any of the precedent claims, wherein the first message broadcast is caused by an input from a user of said first device of a command to broadcast said data, said input being sensed by a sensor of the first device.

5. The method of claim 4, wherein:
- said sensor is a touchscreen,
- said data to broadcast are data of a content represented by a thumbnail on said touchscreen, and
- said first message broadcast is caused by a gesture of the user comprising a finger sliding on said touchscreen from a location of said thumbnail and at a first direction.

6. The method of claim 5, wherein, upon reception of the content on said second device, said thumbnail is displayed on a touchscreen of said second device, and a storage of the content in a permanent memory of said second device is caused by a gesture of a user of the second device, said gesture comprising a finger sliding on the touchscreen of the second device from a location of the thumbnail in the touchscreen and at a second direction, opposite to the first direction.

7. The method according to any of the precedent claims, wherein at least one of said first and second devices determines repeatedly which devices are being connected to the local network.

8. The method according to any of the precedent claims, wherein said second device determines repeatedly whether said first device is still connected to the local network, and, if said first device is not connected to the network, said second device closes a session of broadcast from the first device.

9. The method according to any of the precedent claims, wherein said first device, upon reception of a command of disconnection from the local network, broadcasts a second message informing at least said second device of a future disconnection of said first device.

10. The method according to any of the preceding claims, wherein the second device, upon reception of a broadcast message informing the second device of a future broadcast of data to receive from a third device, closes a session of broadcast from the first device, and puts itself into an available mode so as to receive broadcast data from the third device.

11. The method according to any of the preceding claims, wherein the first device:
- before broadcasting said first message, detects whether a broadcast session over the local network is already in progress,
- at least upon detection of said broadcast session, closes said broadcast session, and
- opens a new broadcast session with the broadcast of said first message.

12. A device, comprising communication means for broadcasting data over a local network, and further comprising processing means for, prior to the broadcast of said data, driving said communication means so as to broadcast a first message over the local network to inform at least one device connected to said local network of a future broadcast of data to receive from said communication means.

13. A device, comprising communication means via a local network and processing means for, upon reception of a broadcast message informing said device of a future broadcast of data to receive from another device connected to said local network, driving said communication means for putting said communication means into an available mode so as to receive broadcast data from said other device.

14. A computer program product, comprising instructions for performing the method according to anyone of claims 1 to 11, when run by processing means.
